Europäisches Patentamt

European Patent Office

Office européen des brevets

(19)

(11) **EP 0 621 280 B1**

(12) **EUROPÄISCHE PATENTSCHRIFT**

(45) Veröffentlichungstag und Bekanntmachung des Hinweises auf die Patenterteilung:
**19.08.1998 Patentblatt 1998/34**

(51) Int Cl.⁶: **C07F 7/08**, C01B 33/04

(21) Anmeldenummer: **94105523.8**

(22) Anmeldetag: **09.04.1994**

(54) **Verfahren zur Herstellung von Silanen bzw. Organosiliciumhydriden durch Reduktion der entsprechenden Siliciumhalogenide bzw. Organosiliciumhalogenide**

Process for the preparation of silanes or organosiliconhydrides by the reduction of the corresponding halogen containing silicon compounds

Procédé de préparation de silanes ou d'hydrures d'organo-silanes par réduction des halogénures de composés siliciques correspondents

(84) Benannte Vertragsstaaten:
**BE DE FR GB IT NL**

(30) Priorität: **22.04.1993 DE 4313130**

(43) Veröffentlichungstag der Anmeldung:
**26.10.1994 Patentblatt 1994/43**

(73) Patentinhaber: **Th. Goldschmidt AG**
**45127 Essen (DE)**

(72) Erfinder:
• **Klein, Klaus-Dieter, Dr.**
  **D-45468 Mülheim (DE)**
• **Knott, Wilfried, Dr.**
  **D-45141 Essen (DE)**
• **Koerner, Götz, Dr.**
  **D-45259 Essen (DE)**

(56) Entgegenhaltungen:
EP-A- 0 111 924            DE-A- 3 409 172
DE-A- 4 039 278            DE-C- 3 637 273
FR-A- 1 209 875            GB-A- 609 134
US-A- 4 725 419            US-A- 4 925 963
US-A- 5 061 470

• **Noll " Chemie und Technologie der Silicone";** S. 69 - 70 (1968)

**Beschreibung**

Die Erfindung betrifft ein Verfahren zur Herstellung von Silanen bzw. Organosiliciumhydriden durch Reduktion der entsprechenden Siliciumhalogenide bzw. Organosiliciumhalogenide mit einem Metallhydrid in einem flüssigen Reaktionsmedium.

Aus dem Stand der Technik sind Verfahren bekannt, Siliciumhalogenide, welche gegebenenfalls zusätzlich Kohlenwasserstoffreste aufweisen können, durch Umsetzung mit Magnesiumhydrid in die entsprechenden Silane zu überführen. Diese bekannten Verfahren sind aber für eine Anwendung im technischen Maßstab wenig geeignet, da sie entweder bei hohen Temperaturen oder nur nach chemischer Aktivierung des Magnesiumhydrids ablaufen, wobei das Magnesiumhydrid in der aktivierten Form meist pyrophor ist und bei seiner Verwendung besondere Sicherheitsvorkehrungen einzuhalten sind.

So ist es beispielsweise aus der DE-OS 32 47 362 bekannt, Siliciumwasserstoffverbindungen, insbesondere $SiH_4$, aus Halogensilanen in einem Lösungsmittel mit Magnesiumhydrid umzusetzen, welches dadurch erhalten worden ist, daß man Magnesium in Gegenwart eines Katalysators, bestehend aus einem Halogenid eines Metalles der IV. bis VIII. Nebengruppe des periodischen Systems und einer magnesiumorganischen Verbindung bzw. eines Magnesiumhydrids, sowie ggf. in Gegenwart eines polycyclischen Aromaten oder eines tertiären Amins sowie ggf. in Gegenwart eines Magnesiumhalogenids $MgX_2$ mit X = Cl, Br, J mit Wasserstoff umsetzt. Die Herstellung dieses Magnesiumhydrids ist aufwendig und seine Handhabung aufgrund seiner Selbstentzündlichkeit nur unter Einhaltung besonderer Vorsichtsmaßnahmen möglich. Zudem läuft das Verfahren nur mit Ausbeuten von höchstens 80 % der Theorie ab.

In der DE-OS 34 09 172 ist ein Verfahren zur Herstellung von $SiH_4$ beschrieben, bei dem $SiF_4$ mit Magnesiumhydrid in einer Schmelze aus Alkali- oder Erdalkalihalogeniden unter einem Wasserstoffpartialdruck, der größer als der Dissoziationsdruck des Magnesiumhydrids bei der Temperatur der Schmelze ist, umgesetzt wird. Der hohe Energiebedarf zum Aufschmelzen der hier verwendeten eutektischen Salzsysteme (318°C ≤ FP ≤ 450°C) macht den Vorteil einer lösungsmittelfreien Synthese zunichte. Das Verfahren ist auch nicht auf Organosiliciumhalogenide anwendbar, da hier zumindest mit partieller Zersetzung der organischen Substituenten gerechnet werden muß.

Die DE-PS 36 37 273 betrifft ein Verfahren zur Herstellung von SiH-Gruppen enthaltenden Organopolysiloxanen aus den entsprechenden Si-Halogen-Gruppen enthaltenden Organopolysiloxanen durch Umsetzung mit Metallhydriden in einem flüssigen Reaktionsmedium. Das Verfahren weist folgende Merkmale auf:

a) Verwendung eines Metallhydrides aus der Gruppe LiH, NaH, KH, $CaH_2$, $MgH_2$;

b) Verwendung von üblichen Ethern, insbesondere Tetrahydrofuran, als Reaktionsmedium;

c) kontinuierliche Entfernung des sich auf der Oberfläche der Metallhydridteilchen während der Umsetzung abscheidenden Metallhalogenids unter Bildung frischer Oberfläche durch Einwirkung von mechanischer Energie oder Ultraschall.

Eine Übertragung dieses Verfahrens auf monomere Chlorsilane oder Organochlorsilane lag dem Fachmann aber nicht nahe, da es bekannt war, daß Organochlorsilane aufgrund ihrer höheren Oxygenophilie mit Ethern unter Spaltung der Etherbindung reagieren können.

Man hat deshalb auch in jüngster Zeit noch nach alternativen Verfahren gesucht, um die gewünschten Silane aus den entsprechenden Halogensilanen herzustellen. Ein solcher alternativer Weg wurde bei dem Verfahren, welches in der DE-OS 40 32 168 beschrieben ist, gefunden, bei dem ein Organosiliciumhalogenid mit Aminalan, wie z.B. Triethylaminalan, in das entsprechende Organosiliciumhydrid überführt wird. Dieses Aminalan wird durch Umsetzung einer Lösung von Triethylamin und $AlCl_3$ in Toluol mit $NaAlH_4$ hergestellt. Auch diesem Verfahren ist der Nachteil zu eigen, daß es nur im Labormaßstab durchgeführt werden kann. Im technischen Maßstab ist der Einsatz von $NaAlH_4$ viel zu aufwendig und würde erhebliche Sicherheitsvorkehrungen erforderlich machen.

Die vorliegende Erfindung befaßt sich mit dem technischen Problem, einen Verfahrensweg aufzufinden, der es gestattet, leicht zugängliches Magnesiumhydrid in nicht pyrophorer, also passiver Form einsetzen zu können, dabei aber unter möglichst einfachen Verfahrensbedingungen die Umwandlung der Halogensilane in die Silane vorzunehmen.

In den letzten Jahren sind eine Reihe von Arbeiten bekanntgeworden, die sich mit der Herstellung von sogenanntem Speichermagnesiumhydrid befassen. Hierunter ist Magnesiumhydrid zu verstehen, welches zum wiederholten Male dehydriert und erneut hydriert werden kann und deshalb die Funktion eines Wasserstoffspeichers hat. Dieses Magnesiumhydrid ist nicht pyrophor. Zur Herstellung von Speichermagnesiumhydrid sind folgende Verfahren bekanntgeworden:

In der EP-PS 0 112 548 ist ein Verfahren zur Herstellung von Magnesiumhydrid-Magnesium-Wasserstoff-Speichersystemen beschrieben, bei dem man metallisches Magnesium oder Magnesiumhydrid mit einer Lösung eines Metallkomplexes und/oder einer metallorganischen Verbindung eines Metalles der IV. bis VIII. Nebengruppe des periodischen Systems, gegebenenfalls in Gegenwart von Wasserstoff, umsetzt, wobei das jeweilige Übergangsmetall an der Oberfläche des Magnesium- und/oder Magnesiumhydridpartikels abgeschieden wird. Dieses mit Übergangsmetallen dotierte Magnesium wird mit Wasserstoff bei hohen Temperaturen hydriert.

Die DE-PS 40 27 976 betrifft ein Verfahren zur Herstellung aktiver, reversibel Wasserstoff aufnehmender Magnesiumhydrid-Magnesium-Wasserstoff-Speichersysteme durch Dotieren von fein verteiltem Magnesium mit Nickel, welches durch Zersetzung von Tetracarbonylnickel auf der Oberfläche des Magnesiums abgeschieden wird, sowie ein Verfahren zur unproblematischen Herstellung des dotierten Magnesiumhydrids.

Eine weitere wesentliche Verbesserung und Vereinfachung der Herstellung von Speichermagnesiumhydrid gelang durch das Verfahren der DE-OS 40 39 278, bei dem Magnesiumhydrid durch Einwirkung von Wasserstoff auf Magnesium bei einer Temperatur von $\geq$ 250°C und einem Druck von 0,5 bis 5 MPa hergestellt wird und dessen wesentliches Verfahrensmerkmal die Autokatalyse der Reaktion bei der Ersthydrierung durch Zusatz von mindestens 1,2 Gew.-% Magnesiumhydrid, bezogen auf zu hydrierendes Magnesium, ist. Das so hergestellte Speichermagnesiumhydrid ist somit außerordentlich preisgünstig und lösungsmittelfrei aus billigen Rohstoffen herzustellen. Es ist hochreaktiv, aber dennoch leicht handhabbar und nicht entzündlich. Das auf diesem Wege hergestellte Magnesiumhydrid wird im Sinne der hier vorliegenden Erfindung als "autokatalytisch hergestelltes Magnesiumhydrid" bezeichnet.

Das eingangs genannte technische Problem der Herstellung von Silanen bzw. Organosiliciumhydriden durch Reduktion der entsprechenden Siliciumhalogenide bzw. Organosiliciumhalogenide wird durch das erfindungsgemäße Verfahren einer Lösung zugeführt, wobei das Verfahren durch die Kombination der folgenden Merkmale gekennzeichnet ist:

a) Verwendung von autokatalytisch hergestelltem Magnesiumhydrid,
b) Verwendung von Ethern als Reaktionsmedium,
c) kontinuierliche Entfernung des sich auf der Oberfläche der Magnesiumhydridteilchen während der Umsetzung abscheidenden Magnesiumhalogenids unter Bildung frischer Oberfläche durch Einwirkung von mechanischer Energie oder Ultraschall.

Bevorzugt verwendet man als Speichermagnesiumhydrid das vorstehend beschriebene und nach der Lehre der DE-OS 40 39 278 erhältliche, autokatalytisch hergestellte Magnesiumhydrid. Dieses Magnesiumhydrid ist in besonderer Weise geeignet, die Si-Halogen-Gruppe nahezu quantitativ in die Si-H-Gruppe zu überführen.,

Das erfindungsgemäße Verfahren weist eine hohe Selektivität auf. Es gelingt überraschenderweise, auch Organohalogensilane, deren Organogruppe(n) eine olefinische Doppelbindung aufweisen, wie etwa Vinyltrichlorsilan oder Vinylalkyldichlorsilan, in die entsprechenden Vinylsilane umzuwandeln, ohne bei dem Austausch des Halogenrestes gegen einen Wasserstoffrest die ungesättigte Kohlenwasserstoffgruppe anzugreifen. Dies war nicht vorhersehbar und ist deshalb in besonderer Weise überraschend. Es war ferner überraschend, daß bei den gewählten Reaktionsbedingungen die Halogensilane keine Etherspaltung bewirken.

Das erfindungsgemäße Verfahren wird vorzugsweise mit zwei verschiedenen Gruppen von Siliciumverbindungen als Ausgangsverbindungen durchgeführt: Ein bevorzugtes Verfahren ist dadurch gekennzeichnet, daß man als Siliciumhalogenide bzw. Organosiliciumhalogenide Verbindungen der allgemeinen Formel

$$R_p^1\text{-}SiX_{4\text{-}p} \qquad\qquad I$$

einsetzt, wobei

$R^1$ im Molekül gleich oder verschieden ist und einen, gegebenenfalls halogenierten, Kohlenwasserstoffrest mit bis zu 24 Kohlenstoffatomen bedeutet,
X ein Halogenrest und
p eine Zahl von 0 bis 3 ist.

Der Rest $R^1$ ist dabei vorzugsweise ein Alkyl-, Cycloalkyl-, Aryl-, Aralkyl-, Alkenyl- oder Alkinylrest. Die Reste können halogensubstituiert sein.
X ist vorzugsweise ein Chlorrest.
Beispiele geeigneter Verbindungen sind: Dimethyldichlorsilan, Trimethylchlorsilan, Trimethylbromsilan, Trimethyljodsilan, Trihexylchlorsilan, Methylpropyldichlorsilan, 3-Chlorpropyltrichlorsilan, n-Dodecyltrichlorsilan, (Cyclohexylmethyl)trichlorsilan, Dimethylvinylchlorsilan, Vinyltrichlorsilan, Allyltrichlorsilan, Allylmethylchlorsilan, $\alpha$-Bromvinyltrichlorsilan, p-(Chlormethyl)phenyltrichlorsilan, 3,3,3-Trifluorpropyltrichlorsilan, chloriertes Diphenyldichlorsilan.

Eine weitere bevorzugte Ausführungsform des erfindungsgemäßen Verfahrens ist dadurch gekennzeichnet, daß man als Organosiliciumhalogenide Verbindungen der allgemeinen Formel

$$X_{3\text{-}q}R_q^1Si\text{-}R^2\text{-}SiR_q^1\text{-}X_{3\text{-}q}$$

einsetzt, wobei

$R^1$ und X die bereits angegebene Bedeutung haben,
$R^2$ eine zweiwertige Kohlenwasserstoffgruppe mit 2 bis 24 Kohlenstoffatomen und
q eine Zahl von 0 bis 2 ist.

Bevorzugte Reste $R^2$ sind zweiwertige Alkyl-, Cycloalkyl-, Aryl- oder Aralkylreste. Beispiele für Verbindungen der Formel II sind 1,2-Bis(trichlorsilyl-)ethan, 1,2-Bis-(dichlormethylsilyl-)ethan, 1,2-Bis(chlordimethylsilyl-)ethan, 1,6-Bis-(chlordimethylsilyl-)hexan, 1,8Bis-(chlordimethylsilyl-)octan und 1,4-Bis-[2-(chlordimethylsilyl-)ethyl-]benzol.

Als Lösungsmittel werden vorzugsweise Tetrahydrofuran und 1,2-Dimethoxyethan verwendet. Weitere geeignete Ether sind Dioxan, 1,2-Dimethoxyethan, Diethylenglykoldiethylether, 1,2-Diethoxyethan, Di- oder Tri- oder Tetraethylenglykoldiethylether.

Von wesentlicher Bedeutung ist auch das Merkmal c) des erfindungsgemäßen Verfahrens. Bei der Reaktion des $MgH_2$ gemäß Merkmal a) in einem in Merkmal b) genannten Reaktionsmedium findet in wirtschaftlich vertretbarer Zeit selbst bei erhöhter Temperatur keine nennenswerte Reaktion mit den Siliciumhalogeniden bzw. Organosiliciumhalogeniden statt. Rührt man jedoch z.B. in Gegenwart von Mahlkörpern, ist der Umsatz auch bei mäßigen Temperaturen quantitativ oder zumindest annähernd quantitativ. Derartige, meist kugelförmige Mahlkörper können aus Glas, Keramik oder Stahl bestehen. Ein weiteres Beispiel für die Einwirkung von mechanischer Energie auf das Reaktionsgemisch ist die Verwendung von Rührern, welche im Reaktionsgemisch hohe Scherkräfte erzeugen. Geeignet sind beispielsweise Rührer, welche innerhalb eines Stators einen oder mehrere schnellaufende Rotoren aufweisen. Geeignet sind ferner hochtourige Rührer mit sogenannten Mizer-Scheiben. Zur Einwirkung von mechanischer Energie auf das Reaktionsgemisch sind vorzugsweise Kugelmühlen geeignet. Es ist ferner möglich, die auf der Oberfläche des $MgH_2$ abgeschiedenen Magnesiumhalogenide durch Einwirkung von Ultraschall mittels geeigneten Ultraschallgebern zu entfernen.

Das erfindungsgemäße Verfahren läuft bereits bei Raumtemperatur mit nahezu quantitativen Ausbeuten ab. Die Reaktionsgeschwindigkeit kann durch Erhöhung der Temperatur des Reaktionsmediums z.B. auf 50 bis zu 200°C noch weiter beschleunigt werden.

Das $MgH_2$ gemäß Merkmal a) wird vorzugsweise in stöchiometrischen Mengen (-H : -SiX) oder mit einem geringen Überschuß von bis zu 10 Mol-% eingesetzt.

Nach der Umsetzung, welche je nach Ausgangsverbindung, nach wenigen Minuten bis wenigen Stunden beendet ist, kann die Aufarbeitung des Reaktionsgemisches, vorzugsweise nach Filtration, durch Destillation erfolgen. Je nach Siedepunktsdifferenz der Ausgangs- und Endprodukte kann das gewünschte Silan bereits während der Reaktion abgezogen werden. Eventuell mitgerissenes Chlorsilan (oder Organosiliciumhalogenid) kann mittels einer Wasserfalle ausgewaschen werden, so daß das erfindungsgemäße Verfahren definierte Produkte hoher Reinheit in einfacher und wirtschaftlicher Weise liefert.

Die erfindungsgemäßen Silane bzw. Organosiliciumhydride können direkt, z.B. zur Hydrophobierung von Oberflächen, vorzugsweise jedoch als reaktive Zwischenprodukte zur Herstellung monomerer oder polymerer Organosiliciumverbindungen eingesetzt werden.

Das erfindungsgemäße Verfahren wird anhand der folgenden Beispiele noch näher erläutert:

Beispiel 1

In einer 500-ml-Laborkugelmühle werden 11,5 g 91 %iges, autokatalytisch hergestelltes Magnesiumhydrid (entsprechend 0,40 Mol $MgH_2$) einer mittleren Partikelfeinheit von 54 um in 217 g Tetrahydrofuran zusammen mit 46,5 g (0,36 Mol) Dimethyldichlorsilan $(CH_3)_2SiCl_2$ unter ständiger Aufmahlung auf Rückflußtemperatur erhitzt. Zur Aufnahme des entwickelten Dimethylsilans $(CH_3)_2SiH_2$ dient eine Vorlage, die hinter den aufgesetzten Rückflußkühler geschaltet ist und auf -78°C gekühlt wird. Nach 3 1/2 Stunden wird dem Reaktionsansatz mit einer Spritze eine Probe entnommen und diese zentrifugiert. Der klare Überstand wird hydrolysiert und der Säurewert bestimmt (99,7 % Umsatz). Der eingekühlte Inhalt der Vorlage wird so umkondensiert, daß das verdampfte Dimethylsilan gleichzeitig einer Waschung mit Wasser zur Entfernung letzter Säure- und Lösungsmittelreste unterzogen wird. Erhalten werden 19,8 g reines Dimethylsilan (GC-MS), entsprechend 92 % der Theorie, bezogen auf $(CH_3)_2SiCl_2$.

Beispiel 2

Gemäß Beispiel 1 werden 16,4 g 91 %iges, autokatalytisch hergestelltes Magnesiumhydrid (entsprechend 0,57 Mol $MgH_2$) einer mittleren Partikelfeinheit von 54 um in 224 g 1,2-Dimethoxyethan mit 112 g (1,03 Mol) Trimethylmonochlorsilan in einer Laborkugelmühle unter ständiger Aufmahlung bei Rückflußtemperatur umgesetzt. Eine Säurewertbestimmung, wie im Beispiel 1 beschrieben, belegt nach 4 Stunden Reaktionszeit quantitativen Säurewertumsatz. Das in einer auf -78°C gekühlten Vorlage aufgefangene rohe Trimethylsilan wird während des Umkondensierens mit Wasser säure- und glymefrei gewaschen. Nach Reinigung werden 70 g Trimethylsilan (Ausbeute: 92 % der Theorie, bezogen auf eingesetztes Trimethylmonochlorsilan), erhalten. Die über GC-MS bestimmte Reinheit liegt bei > 98 %.

Beispiel 3

Gemäß Beispiel 1 und 2 werden 24,6 g 91 %iges, autokatalytisch hergestelltes Magnesiumhydrid (entsprechend 0,85 Mol $MgH_2$) einer mittleren Partikelgröße von 54 um in 224 g 1,2-Dimethoxyethan mit 83,3 g (0,52 Mol) Vinyltrichlorsilan $(CH_2=CH)SiCl_3$ unter ständiger Aufmahlung bei Rückflußtemperatur in einer Laborkugelmühle umgesetzt. Nach 3 Stunden Reaktionszeit werden in einer tiefgekühlten Vorlage (-78°C) 31 g rohes Vinylsilan $(CH_2=CH)SiH_3$ aufgefangen, die nach waschendem Umkondensieren 28 g reines Vinylsilan liefern. Ausbeute: 93 % der Theorie, bezogen auf eingesetztes Vinyltrichlorsilan; Reinheit gemäß GC-MS-Analytik: > 98 %.

**Patentansprüche**

1.  Verfahren zur Herstellung von Silanen bzw. Organosiliciumhydriden durch Reduktion der entspre-

chenden Siliciumhalogenide bzw. Organosilicium-halogenide mit einem Magnesiumhydrid in einem flüssigen Reaktionsmedium, gekennzeichnet durch die Kombination folgender Merkmale:

a) Verwendung autokatalytisch hergestelltem Magnesiumhydrid,
b) Verwendung von Ethern als Reaktionsmedium,
c) kontinuierliche Entfernung des sich auf der Oberfläche der Magnesiumhydridteilchen wäh-rend der Umsetzung abscheidenden Magensi-umhalogenids unter Bildung frischer Oberflä-che durch Einwirkung von mechanischer Energie oder Ultraschall.

2. Verfahren nach Anspruch 1, dadurch gekennzeichnet, daß man als Siliciumhalogenide bzw. Organosiliciumhalogenide Verbindungen der allgemeinen Formel

$$R^1_p\text{-}SiX_{4-p}$$

einsetzt, wobei

R¹ im Molekül gleich oder verschieden ist und einen, gegebenenfalls halogenierten, Kohlenwasserstoffrest mit bis zu 24 Kohlenstoffatomen bedeutet,
X ein Halogenrest und
p eine Zahl von 0 bis 3 ist.

3. Verfahren nach Anspruch 1, dadurch gekennzeichnet, daß man als Organosiliciumhalogenide Verbin-dungen der allgemeinen Formel

$$X_{3-q}R^1_q\,Si\text{-}R^2\text{-}SiR^1_q\,\text{-}X_{3-q}$$

einsetzt, wobei

R¹ und X die bereits angegebene Bedeutung haben,
R² eine zweiwertige Kohlenwasserstoffgruppe mit 2 bis 24 Kohlenstoffatomen und
q eine Zahl von 0 bis 2 ist.

4. Verfahren nach Anspruch 2 oder 3, dadurch gekennzeichnet, daß der Rest R¹ ein Alkyl-, Cycloalkyl-, Aryl-, Aralkyl-, Alkenyl- oder Alkinylrest ist.

5. Verfahren nach Anspruch 2 oder 3, dadurch gekennzeichnet, daß der Rest R² ein zweiwertiger Alkyl-, Cycloalkyl-, Aryl- oder Aralkylrest ist.

6. Verfahren nach einem oder mehreren der vorhergehenden Ansprüche, dadurch gekennzeichnet,

daß man als Reaktionsmedium Tetrahydrofuran oder 1,2-Dimethoxyethan verwendet.

7. Verfahren nach einem oder mehreren der vorhergehenden Ansprüche, dadurch gekennzeichnet, daß man gemäß Merkmal c) eine Kugelmühle verwendet.

## Claims

1. Process for preparing silanes or organosilicon hydrides by reduction of the corresponding silicon halides or organosilicon halides using a magnesium hydride in a liquid reaction medium, characterized by the combination of the following features:

a) use of autocatalytically prepared magnesium hydride,
b) use of ethers as reaction medium,
c) continuous removal of the magnesium halide which deposits on the surface of the magnesium hydride particles during the reaction so as to form fresh surface by the action of mechanical energy or ultrasound.

2. Process according to Claim 1, characterized in that silicon halides or organosilicon halides used are compounds of the general formula

$$R^1_p\text{-}SiX_{4-p}$$

where

R¹ are identical or different in the molecule and are each a halogenated or unhalogenated hydrocarbon radical having up to 24 carbon atoms,
X is a halogen radical and
p is from 0 to 3.

3. Process according to Claim 1, characterized in that organosilicon halides used are compounds of the general formula

$$X_{3-q}R^1_q Si\text{-}R^2\text{-}SiR^1_q\text{-}X_{3-q}$$

where

R¹ and X are as defined above,
R² is a divalent hydrocarbon group having from 2 to 24 carbon atoms and
q is from 0 to 2.

4. Process according to Claim 2 or 3, characterized in that the radical R¹ is an alkyl, cycloalkyl, aryl, aralkyl, alkenyl or alkynyl radical.

5. Process according to Claim 2 or 3, characterized in that the radical $R^2$ is a divalent alkyl, cycloalkyl, aryl or aralkyl radical.

6. Process according to one or more of the preceding claims, characterized in that the reaction medium used is tetrahydrofuran or 1,2-dimethoxyethane.

7. Process according to one or more of the preceding claims, characterized in that a ball mill is used for feature c).

## Revendications

1. Procédé pour la préparation de silanes ou d'hydrures d'organosilicium par réduction des halogénures de silicium ou d'organosilicium correspondants au moyen d'un hydrure de magnésium dans un milieu réactionnel liquide, caractérisé par la combinaison des caractéristiques suivantes:

   a) utilisation d'hydrure de magnésium préparé par voie autocatalytique,
   b) utilisation d'éthers en tant que milieu réactionnel,
   c) élimination continue de l'halogénure de magnésium se déposant à la surface des particules d'hydrure de magnésium pendant la conversion, de façon à former des surfaces fraîches sous l'effet d'énergie mécanique ou d'ultrasons.

2. Procédé selon la revendication 1, caractérisé en ce que l'on utilise, comme halogénures de silicium ou halogénures d'organosilicium, des composés de formule générale

$$R^1_p\text{-}SiX_{4\text{-}p}$$

dans laquelle

   $R^1$ est identique ou différent dans la molécule et représente un radical hydrocarbure, éventuellement halogéné, comprenant jusqu'à 24 atomes de carbone,
   X est un radical halogène et
   p est un nombre de 0 à 3.

3. Procédé selon la revendication 1, caractérisé en ce que l'on utilise, comme halogénures d'organosilicium, des composés de formule générale

$$X_{3\text{-}q}R^1_q Si\text{-}R^2\text{-}SiR^1_q\text{-}X_{3\text{-}q}$$

dans laquelle

   $R^1$ et X ont la signification déjà indiquée,
   $R^2$ est un groupement hydrocarbure bivalent comprenant de 2 à 24 atomes de carbone et q est un nombre de 0 à 2.

4. Procédé selon la revendication 2 ou 3, caractérisé en ce que le radical $R^1$ est un radical alkyle, cycloalkyle, aryle, aralkyle, alcényle ou alcynyle.

5. Procédé selon la revendication 2 ou 3, caractérisé en ce que le radical $R^2$ est un radical alkyle, cycloalkyle, aryle ou aralkyle bivalent.

6. Procédé selon l'une ou plusieurs des revendications précédentes, caractérisé en ce que l'on utilise du tétrahydrofurane ou du 1,2-diméthoxyéthane comme milieu réactionnel.

7. Procédé selon l'une ou plusieurs des revendications précédentes, caractérisé en ce que l'on utilise, selon la caractéristique c), un broyeur à boulets.